# EUROPEAN PATENT SPECIFICATION

(11) **EP 2 408 974 B1**
(45) Date of publication and mention of the grant of the patent: **15.05.2013**
(21) Application number: 10718091.1
(22) Date of filing: 15.03.2010
(51) Int. Cl.: E02F 7/06, B03B 9/00, B09C 1/00

(54) **METHOD AND ASSEMBLY FOR TREATING DREDGED MATERIAL EXTRACTED BY MEANS OF A DREDGING VESSEL**
VERFAHREN UND ANORDNUNG ZUR BEHANDLUNG VON MIT EINEM BAGGERSCHIFF AUSGEHOBENEM MATERIAL
PROCEDE ET ENSEMBLE POUR TRAITER DU MATERIAU DRAGUE EXTRAIT PAR UN NAVIRE DE DRAGAGE

(30) Priority: 16.03.2009 BE 200900158
(43) Date of publication of application: 25.01.2012
(73) Proprietor: Dredging International N.V., 2070 Zwijndrecht (BE)
(72) Inventor: VANDYCKE, Stefaan, B-8450 Bredene (BE)
(74) Representative: Brouwer, Hendrik Rogier
(86) International application number: PCT/EP2010/053288
(87) International publication number: WO 2010/106015

(56) References cited:
- DE-A1- 3 825 223
- DE-A1- 4 410 229
- GB-A- 692 668
- US-A- 4 541 927
- US-A1- 2004 181 113

## Description

The invention relates to a method and an assembly for treating dredged material extracted by means of a dredging vesset. The invention likewise relates to a method for transferring large quantities of dredged material from extraction areas to a recovery area located a great distance away/Building land is scarce in many regions of the world. This is for instance the case in and around Singapore, which is surrounded by a large amount of water. It is usual in such regions to create building land by discharging ground material on site or in the surrounding waters. The ground material is usually extracted here from the bed of surrounding gulfs, bays, canals and/or oceans by means of dredgers suitable for the purpose, wherein the dredged material must often also be treated after offloading in order to make it suitable for its function, for instance as building land.

Two main problems occur here. The usual dredging method has been found to be cost-effective and technically feasible only when the ground for dredging is located not too far away from the offloading location. It is however becoming increasingly difficult to find sufficient ground material at a relatively short distance from the offloading location. There is therefore a need for a method for transferring large quantities of dredged material in cost-effective manner from extraction areas to a recovery area (or offloading location) located a great distance away. A second problem is that in the usual method the dredged material is offloaded onto the land and, if desired, then treated. The onshore storage capacity may however be limited, particularly in regions surrounded by a great deal of water, as in the case of the above mentioned Singapore.

GB 692668, which discloses a method for treating dredged material in accordance with the preamble of claim 1 and an assembly for treating dredged material in accordance with the preamble of claim 13, describes a suction dredger comprising a pump for the recovery of dredged material, wherein the delivery side of the pump is connected with a series of cyclones disposed in parallel to dry the dredged material. The cyclones form part of the pumping system and must have a relatively small capacity to function properly.

US 2004/0181113 A1 describes a high temperature and high pressure method for chemically altering hazardous chemicals present in dredged sludge in rivers. The dredged sludge is dewatered to an estimated 50% solids content by an arbitrary method such as centrifugation, filtration or pressing. The solids stream is then run through several centrifugal separators to remove the heavy metals from the solids stream. Both (contaminated and clean) solid streams are then again dewatered to achieve an anticipated 50% solids content and pumped into a barge for transport. The barge is small, i.e. sized to allow transit through the river locks system.

DE 3825223 A1 discloses a device for drying a sand/water/contaminant mixture. The device comprises a swing sorter in the form of a through like swing bottom that separates a heavy fraction from a light fraction. The heavy fraction comprising sand and water is built up behind a separator on one side of the swing bottom and washed by spraying it with fluid. Excess water is evacuated through holes, provided in the swing bottom at said side. The lighter fraction is transported to the other side of the separator, at which side the swing bottom has no holes. A cyclone delivers the mixture to the device.

DE 4410229 A1 describes a device and method to separate dredged material into fractions with specific particle sizes. In the disclosed method a combination of a plurality of separation devices is used.

US 4,541,927 describes a method and device for the treatment of material dredged by a cutter suction dredger. The dredged material is fed to centrifugal separators that are provided on a rotating platform for subsequent feeding. The centrifugal separators separate the dredged material into a dry heavier fraction and a wetter fraction. The wetter fraction is led back to the cutter head. The dried solid material is further dried in an electrically heated rotating oven and the resulting pulverized dry material bagged in sacks.

The invention has for its object to provide a method in accordance with claim 1 and an assembly in accordance with claim 13 for treating dredged material extracted by means of a dredging vessel, in addition to a method and vessel for transferring large quantities of dredged material from extraction areas to a recovery area located a great distance away, wherein the above stated drawbacks are at least partially obviated.

According to the invention, there is provided for this purpose a method for treating dredged material extracted by means of a dredging vessel, wherein the dredged material is fed from the dredging vessel to at least one centrifugal separator, which centrifugal separator separates the dredged material into a wet fraction and a dry fraction, wherein at least the dry fraction is collected and fed to a gravitational separator, which gravitational separator further separates the collected dry fraction into a drier and a wetter fraction, wherein at least the drier fraction is collected in a transport vessel, adapted for receiving a quantity of drier fraction of the dredged material amounting to at least 50000 tonnes. By subjecting the dredged material from the hold of the dredging vessel to centrifugal separation, a dry fraction is separated in cost-effective manner from the dredged material and collected and can, if desired, be used as building land. The method according to the invention allows the dredged material to be treated before it is offloaded onshore or at another discharge location. It has been found that the dredged material treated according to the invented method takes up less space than untreated dredged material, this providing advantages in the offloading of dredged material in areas with limited storage capacity. In the method according to the invention the wet fraction can; if desired, be collected in a collecting means suitable for this purpose, for instance for further treatment. Preferably however, the separated wet fraction is returned to the surrounding water.

According to the invention the collected dry fraction is fed to a gravitational separator, which gravitational separator further separates the collected dry fraction into a drier and a wetter fraction, wherein at least the drier fraction is collected. The terms drier and wetter fraction wall are defined here relative to the dry fraction. It has been found that the combination of at least one centrifugal separator and at least one gravitational separator acts synergistically and results in a qualitatively improved drier fraction, which can more advantageously be used as for instance building land.

A further advantage of the invented method is that the particle size distribution of the dredged material can be influenced in efficient manner. It is advantageous here for the centrifugal separation and/or the gravitational separation to be performed such that the dry fraction and/or drier fraction has a particle size distribution with a d₅₀ lying between 50 and 1500 micron, more preferably between 150 and 1200 micron, and most preferably between 300 and 1000 micron.

A particularly suitable method according to the invention is characterized in that the gravitational separator comprises a draining screen which sets the collected dry fraction into vibration and, under the influence of gravitational force, separates it into a drier fraction and a wetter fraction.

In a further preferred embodiment of the method a hydrocyclone is applied as centrifugal separator. A hydrocyclone comprises a cylindrical revolving body which transposes toward the bottom into a conical outflow part. The dredged material for treating is introduced under pressure tangentially into the hydrocyclone on the top side via an eccentrically disposed feed conduit, whereby the dredged material is set into rotating flow or vortex. The vortex flings the heavier fraction of the dredged material against the side wall of the hydrocyclone, wherein this heavier fraction, under the influence of gravitational force, is set into a descending spiral flow. The heavier fraction eventually enters the conical part, in which it is further accelerated and finally discharged via the outflow. The lighter fraction (also including water) continues to float and enters the central part of the hydrocyclone. Owing to the conical form of the hydrocyclone the lighter fraction is eventually pushed upward, where it is discharged via an overflow. Since in dredged material the lighter fraction comprises water, the heavier fraction will correspond to the dry fraction, while the lighter fraction will correspond to the wet fraction.

A further advantage of the present variant is that not only the moisture content but also the particle size distribution of the dry and/or drier fraction can be controlled. In this respect the separating diameter d₅₀ is defined as the diameter of a particle with an equal chance of becoming part of the lighter or heavier fraction. The preciseness of the final separation depends on, among other factors, the chosen hydrocyclone configuration and the properties of the dredged material. Relevant quantities in this respect are the internal cyclone diameter, the diameters of the inlet, the overflow and the underflow, the height of the cylindrical and conical part of the hydrocyclone and the capacity of the hydrocyclone. A further advantage of the invented method is that the particle size distribution of the dredged material can be influenced in efficient manner. It is advantageous here for the centrifugal separation and/or the gravitational separation to be performed such that the dry fraction and/or drier fraction has a particle size distribution with a d₅₀ lying between 50 and 1500 micron, preferably between 150 and 1200 micron, more preferably between 300 and 1000 micron, and most preferably between 500 and 800 micron.

In a particularly suitable method a multi-cyclone is applied as centrifugal separator. Such a multi-cyclone comprises a number of hydrocyclones connected in parallel, wherein the number preferably lies between 2 and 20, more preferably between 3 and 15, and most preferably between 4 and 10.

A further preferred embodiment of the method according to the invention has the feature that the dredged material is brought to the appropriate mass density prior to being fed to the centrifugal separator. The appropriate mass density depends on, among others, a number of factors such as the properties of the dredged material, the desired properties of the dredged material after treatment, and the above-mentioned design quantities of the hydrocyclone or multi-cyclone. By bringing the mass density to a substantially constant average mass density prior to the centrifugal separation a higher separation efficiency is obtained, as well as a higher quality of the treated dredged material. A particularly appropriate mass density of the untreated dredged material lies between 1.1 ton/m³ and 1.3 ton/m³, and more preferably between 1.15 ton/m³ and 1,25 ton/m³. A particularly appropriate mass density of the dry fraction of the treated dredged material lies between 1.8 ton/m³ and 2.0 ton/m³, and more preferably between 1.85 ton/m³ and 1.95 ton/m³. The mass density of the wet fraction of the treated dredged material generally lies between 1.03 ton/m³ and 1.13 ton/m³, but can also have much higher values, particularly when many fine particles are present in the wet fraction. A particularly appropriate mass density of the drier fraction of the treated dredged material lies between 1.75 ton/m³ and 1.95 ton/m³, and more preferably between 1.80 ton/m³ and 1.90 ton/m³.

In a further preferred variant the mass density of the dredged material is brought to the appropriate mass density by adding water thereto, and more preferably by providing a water flow to which the dredged material is supplied in controlled manner. This can take place in suitable manner in the dredging vessel itself and/or between the dredging vessel and the feed to the at least one centrifugal separator. If desired, the dredged material present in the hold of the dredging vessel can be fluidized by being subjected to a high-pressure water flow from high-pressure spray nozzles arranged in the dredged material. It is striking that it is precisely by adding water beforehand to the dredged material to be treated, in particular dried, that a higher separating efficiency is achieved.

It is further advantageous when the dredged material is fed at a substantially constant flow rate to the at least one centrifugal separator. It has been found that exceptionally large quantities of dredged material can be treated in cost-effective manner with the method according to the invention. A preferred method according to the invention is characterized in that the substantially constant flow rate fed to the at least one centrifugal separator amounts to at least 6000 m³/hour, preferably at least 9000 m³/hour, more preferably at least 12000 m³/hour, and most preferably at least 20000 m³/hour. A plurality of centrifugal separators connected in parallel are preferably utilized for the higher flow rates. Such flow rates allow at least 45 million tonnes of dredged material to be treated per year, this typically providing at least 10 million tons of treated dredged material per year. These quantities are not possible with more conventional separating methods, such as for instance those based on gravitational force.

It has been found that a method according to the invention has particular advantages wherein the dry and/or drier fraction has a water content of a maximum of 20% by weight, more preferably a maximum of 15% by weight and most preferably a maximum of 10% by weight. This is because such a treatment of the dredged material is highly suitable for a method wherein the dry and/or drier fraction is collected in a transport vessel suitable for receiving a quantity of dry or drier fraction of the dredged material which amounts to at least 50000 tonnes, preferably at least 100000 tonnes, more preferably at least 150000 tonnes and most preferably at least 200000 tonnes, and is subsequently transported to a recovery area preferably located a large distance away.

According to the invention a method is more particularly provided for transferring large quantities of dredged material from extraction areas to a recovery area located a great distance away, wherein the method comprises the steps of mooring in the vicinity of the extraction area at least one seagoing transport vessel with considerably larger dimensions than a dredging vessel and suitable for receiving a large quantity of dredged material in transportable condition, extracting dredged material using at least one dredging vessel, bringing the dredged material into transportable condition by applying the method for treating dredged material according to the invention, collecting the dry and/or drier fraction in the transport vessel, transporting the dry and/or drier fraction to the recovery area using the transport vessel, mooring the transport vessel in the recovery area and offloading the dry and/or drier fraction from the transport vessel in the recovery area.

An additional advantage of the invented method is that the dry and/or drier fraction complies with the requirements set by the International Maritime Organization for transport with bulk carriers (the IMO standards for transport with bulk carriers).

The invention also relates to an assembly for treating dredged material, comprising a device which device comprises at least one centrifugal separator suitable for separating the dredged material into a wet fraction and a dry fraction, wherein the centrifugal separator comprises a feed for the dredged material for treating and a discharge for the dry fraction. The feed can preferably be coupled to the discharge conduit of the hold of a dredging vessel.

The device further comprises at least one gravitational separator connected to the discharge of the centrifugal separator and suitable for separating the dry fraction into a drier and a wetter fraction, wherein the device also comprises discharge means for discharging the drier fraction.

The device can in principle be placed at any desired location between a dredging vessel and an offloading location or transport vessel. It is however advantageous to arrange the device on a dredging vessel, or on a pontoon typically moored in the vicinity of a dredging vessel and/or a transport vessel.

The assembly according to the invention further comprises a transport vessel of the above stated size, which is provided with the device. There are additional advantages here when the device is placed relative to the hold of the transport vessel such that the discharge of the dry or drier fraction to the hold takes place without intervening discharge means. Such an arrangement considerably increases the loading speed.

The usual dredging method comprises the use of a dredging vessel such as a trailing suction hopper dredger or a cutter suction dredger, wherein dredged material is suctioned up from the water bottom and via a suction conduit stored temporarily in a hold of the dredging vessel. If the dredged material collected in the hold has to be transported to a distant location, this then generally takes place via land transport and/or via a specially laid pipeline and/or by the dredging vessel sailing to the location. The equipment and logistics required for this purpose make the known method costly. The method according to the invention provides an efficient solution for this purpose.

The transport vessels have a large cargo capacity of at least 50000 DWT (deadweight tonnage), preferably at least 100000 DWT, more preferably at least 150000 DWT and most preferably at least 200000 DWT or even higher. Particularly suitable transport vessels comprise modified Capesize and Panamax vessels, which are generally applied for transport of cargoes from one main port to another. Also suitable are so-called VLCCs (very large crude carriers) modified for the purpose. It is not known, nor is it self-evident, to use such transport vessels for the transport of dredged material, for instance because of stability problems and the generally abrasive character of dredged material. The method according to the invention makes the dredged material transportable with said vessels. It is advantageous to adapt these further by providing them with a double wall between which an air space forms. The width of the air space between the two walls can, if desired, even approximate the width of the hold of the transport vessel. The method according to the invention allows annual transport of for instance 20 million m³ of dredged material over long distances, where the known method can possibly achieve about 4 million m³.

The inventive method is particularly suitable for transferring large quantities of dredged material from extraction areas to a recovery area located a great distance away. Preferred distances are distances of more than 500 km one-way, more preferably more than 1000 km one-way, and most preferably more than 1500 km one-way.

In a further preferred embodiment of the method according to the invention the dredged material is tried to a water content amounting to a maximum of 20% by weight, more preferably a maximum of 15% by weight.

The method according to the invention is particularly suitable for extracting large quantities of ore by transferring large quantities of ore-containing dredged material from extraction areas to a recovery or offloading area located a great distance away.

The present invention will now be further elucidated on the basis of the following figures, without otherwise being limited thereto. In the figures:
Fig. 1 shows schematically an embodiment of a device; and
Fig. 2 shows a schematic perspective view of an assembly of a transport vessel and a dredging vessel as typically applied in the method according to the invention.

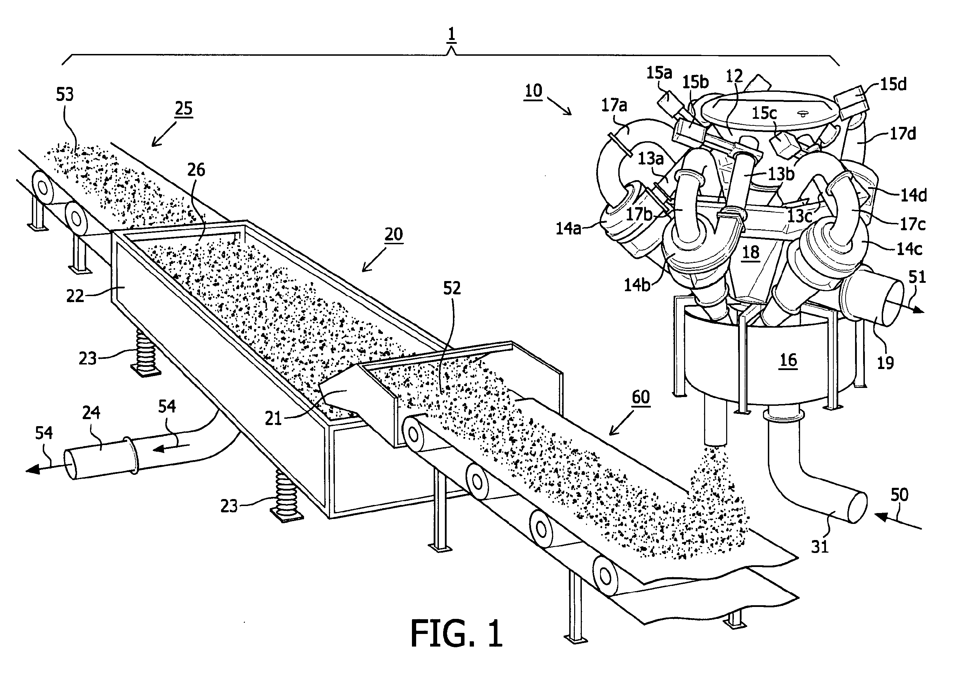

Referring to figure 1, an embodiment of a device 1 for treating dredged material 50 is shown. In the shown embodiment device 1 comprises a centrifugal separator in the form of a multi-cyclone 10 and, connected in series therewith, a gravitational separator in the form of draining screen 20.

The dredging material 50 for treating comes from the hold (not shown) of a dredging vessel 30. A suitable dredging vessel 30 comprises for instance a trailing suction hopper dredger or a cutter suction dredger. Dredged material 50 is fed through a conduit 31 coupled to a feed to a multi-cyclone 10 and fed under pressure into distribution tank 12. Multi-cyclone 10 separates dredged material 50 into a wet fraction 51 and a dry fraction 52, as will be further elucidated below. In the shown variant the feeds (13a, 13b, 13c,...) of five hydrocyclones (14a, 14b, 14c,...) are connected to distribution tank 12. Each feed (13a, 13b, 13c,...) is provided with a corresponding closing valve (15a, 15b, 15c,...) which can control the flow rate fed to each cyclone. Each hydrocyclone (14a, 14b, 14c,...) of multi-cyclone 10 comprises a cylindrical revolving body which transposes toward the bottom into a conical outflow part. The dredged material 50 for treating is introduced under pressure tangentially into the relevant hydrocyclone on the top side of each cyclone via the eccentrically disposed feeds (13a, 13b, 13c,...). The dredged material 50 is hereby set into a rotating flow or vortex which ensures that the heavier fraction of dredged material 50 is flung against the side wall of hydrocyclones (13a, 13b, 13c,...), wherein this heavier fraction, under the influence of gravitational force, is set into a descending spiral flow. The heavier fraction eventually enters the conical part of each hydrocyclone (14a, 14b, 14c,...) in which it is further accelerated and finally discharged via the outflow to a buffer vessel 16. The lighter fraction (also including water) enters the central part of hydrocyclones (14a, 14b, 14c,...) and, due to the conical form of the hydrocyclones, is finally pushed upward, where it is discharged via overflows (17a, 17b, 17c,...) to a collection container 18, from where the lighter fraction is further pumped via discharge conduit 19 to the surrounding water. Because the lighter fraction of the dredged material 50 for treating comprises water, it will correspond to wet fraction 51, while the heavier fraction corresponds to dry fraction 52. Dry fraction 52 is transferred from buffer vessel 16 via a conveyor belt 60 to a gravitational separator in the form of draining screen 20. Draining screen 20 comprises a buffer trough 21 from which dry fraction 52 is carried into a separating reservoir 22. Separating reservoir 22 comprises a floor (not visible) provided with openings of a determined dimension. The floor is set into a vertical vibration by means of actuators (not shown). The floor is provided for this purpose with springs 23. Because dry fraction 52 received in separating reservoir 22 is set into vibration, dry fraction 52 is separated, under the influence of gravitational force, into a fraction 53, which is drier compared to dry fraction 52, and wetter fraction 54. Depending on the set mesh width, the particle size of drier fraction 53 can be influenced. The drier and wetter fraction are discharged by respectively conveyor belt 25 and discharge conduit 24. Discharge conduit 24 for wetter fraction 54 leads to the surrounding water. Conveyor belt 25 for drier fraction 53 leads to an offloading location or, in a preferred embodiment, to the hold (not shown) of a transport vessel 40, particularly of the Panamax or similar type. Discharge conduit 24 and conveyor belt 25 are not essential. It is thus possible for instance to leave the side 26 of separating reservoir 22 opposite buffer trough 21 open and to place draining screen 20 along the side of the hold of transport vessel 40. Drier fraction 53 then drops automatically out of separating reservoir 22 into the hold. Conduit 24 can also be omitted, whereby the wetter fraction (mainly water) flows away via the floor to for instance the surrounding water. It will be apparent that many technical variants are possible.

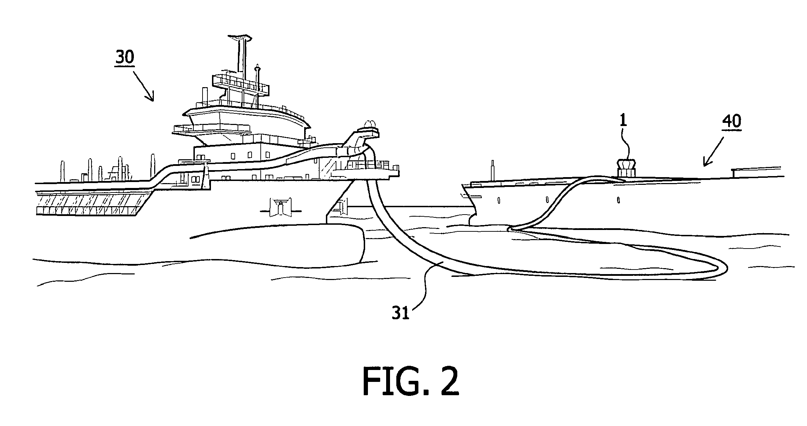

Referring to figure 2, an assembly of a transport vessel 40 of the Panamax type and dredging vessel 30 is shown. Transport vessel 40 has considerably greater dimensions than dredging vessel 30, for instance 10 times greater, and is suitable for receiving large quantities of dredged material 50 in transportable condition. According to an aspect of the invention, a large quantity of dredged material 50 is carried from an extraction area to a recovery area located a great distance away. Transport vessel 40 is moored for this purpose in the vicinity of the extraction area. Using dredging vessel 30 dredged material 50 is dredged from the water bottom and stored temporarily in the hold (not shown). Dredged material 50 is brought into transportable condition by applying a method as described above. In the shown embodiment variant transport vessel 40 is provided for this purpose with device 1. The thus obtained dry and/or drier fraction is stored in the transport vessel, more particularly in the holds of transport vessel 40, and subsequently transported to the recovery area.

## Claims

1. Method for treating dredged material (50) extracted by means of a dredging vessel (30), wherein the dredged material (50) is fed from the dredging vessel (30) to at least one centrifugal separator (10), which centrifugal separator (10) separates the dredged material (50) into a wet fraction (51) and a dry fraction (52), **characterized in that** at least the dry fraction (52) is collected and fed to a gravitational separator (20), which gravitational separator (20) further separates the collected dry fraction (52) into a drier (53) and a wetter fraction (54) relative to the dry fraction (52), wherein at least the drier fraction (53) is collected in a transport vessel (40), adapted for receiving a quantity of drier fraction (53) of the dredged material (50) amounting to at least 50000 tonnes.

2. Method as claimed in claim 1, wherein the dredged material (50) is brought to the appropriate mass density prior to being fed to the centrifugal separator (10).

3. Method as claimed in claim 2, wherein the mass density of the dredged material (50) is brought to the appropriate mass density by adding water thereto.

4. Method as claimed in claim 3, wherein the mass density of the dredged material (50) is brought to the appropriate mass density by providing a water flow to which the dredged material (50) is supplied in controlled manner.

5. Method as claimed in any of the foregoing claims, wherein the dredged material (50) is fed at a substantially constant flow rate to the centrifugal separator (10).

6. Method as claimed in claim 5, wherein the substantially constant flow rate amounts to at least 6000 m³/hour, more preferably at least 9000 m³/hour, and most preferably at least 12000 m³/hour.

7. Method as claimed in any of the foregoing claims, wherein the centrifugal separator (10) comprises a hydrocyclone (14).

8. Method as claimed in claim 7, wherein the centrifugal separator comprises a multi-cyclone (14a, 14b, 14c, ...).

9. Method as claimed in any of the claims 1-8, wherein the gravitational separator (20) comprises a draining screen which sets the collected dry fraction (52) into vibration and, under the influence of gravitational force, separates it into a drier fraction (53) and a wetter fraction (54).

10. Method as claimed in claim 9, wherein the transport vessel (40) is suitable for receiving a quantity of drier fraction (53) of the dredged material (50) which amounts to at least 100000 tonnes, more preferably at least 150000 tonnes and most preferably at least 200000 tonnes.

11. Method as claimed in any of the foregoing claims, wherein the drier fraction (53) has a water content of a maximum of 20% by weight, more preferably a maximum of 15% by weight.

12. Method for transferring large quantities of dredged material (50) from extraction areas to a recovery area located a great distance away, comprising the steps of mooring in the vicinity of the extraction area at least one seagoing transport vessel (40) with considerably larger dimensions than a dredging vessel (30) and suitable for receiving a large quantity of dredged material (50) in transportable condition, extracting dredged material (50) using at least one dredging vessel (30), bringing the dredged material (50) into transportable condition by applying a method as claimed in any of the claims 1-11, collecting at least the drier fraction (53) in the transport vessel (40), transporting the drier fraction (53) to the recovery area using the transport vessel (40), mooring the transport vessel (40) in the recovery area and offloading the drier fraction (53) from the transport vessel (40) in the recovery area.

13. Assembly for treating dredged material (50), the assembly comprising a device (1) which device (1) comprises:
- at least one centrifugal separator (10) suitable for separating the dredged material (50) into a wet fraction (51) and a dry fraction (52), wherein the centrifugal separator (10) comprises a feed for the dredged material (50) for treating and a discharge for the dry fraction (52), the assembly further comprising a transport vessel (40) **characterized in that** - the device (1) further comprises at least one gravitational separator (20) connected to the discharge of the centrifugal separator (10) and suitable for separating the dry fraction (52) into a drier (53) and a wetter fraction (54) relative to the dry fraction (52), and comprising discharge means (25) for discharging the drier fraction (53); and **in that** - the transport vessel (40) is adapted for receiving a quantity of drier fraction (53) of the dredged material (50) amounting to at least 50000 tonnes.

14. Assembly as claimed in claim 13, wherein the device (1) is provided on a dredging vessel (30) or pontoon.

15. Assembly as claimed in claim 13, wherein the device (1) is provided on the transport vessel (40).

16. Assembly as claimed in claim 15, wherein the device (1) is positioned relative to the hold of the transport vessel (40) such that the discharge of the drier fraction (53) to the hold takes place without intervening discharge means.

## Patentansprüche

1. Verfahren zur Behandlung von Baggergut (50), das mit einem Baggerschiff (30) ausgebaggert wurde, wobei das Baggergut (50) vom Baggerschiff (30) in mindestens einen Zentrifugalabscheider (10) befördert wird, der das Baggergut (50) in einen Nassanteil (51) und einen Trockenanteil (52) trennt, **dadurch gekennzeichnet, dass** mindestens der Trockenanteil (52) gesammelt und in einen Gravitationsabscheider (20) befördert wird, der den gesammelten Trockenanteil (52) weiter in einen trockeneren (53) und einen nasseren Teil (54) des Trockenanteils (52) trennt, wobei mindestens der trockenere Teil (53) in einem Transportschiff (40) gesammelt wird, das so ausgelegt ist, dass es eine Menge an trockenerem Teil (53) des Baggerguts (50) aufnehmen kann, die mindestens 50.000 Tonnen beträgt.

2. Verfahren nach Anspruch 1, wobei das Baggergut (50) auf die geeignete Massendichte gebracht wird, bevor es in den Zentrifugalabscheider (10) eingeleitet wird.

3. Verfahren nach Anspruch 2, wobei die Massendichte des Baggerguts (50) durch Hinzufügen von Wasser auf die geeignete Massendichte gebracht wird.

4. Verfahren nach Anspruch 3, wobei das Baggergut (50) durch Bereitstellen eines Wasserflusses, dem das Baggergut (50) auf kontrollierte Weise beigemischt wird, auf die geeignete Massendichte gebracht wird.

5. Verfahren nach allen vorherigen Ansprüchen, wobei das Baggergut (50) mit einer im Wesentlichen konstanten Fließgeschwindigkeit in den Zentrifugalabscheider (10) eingeleitet wird.

6. Verfahren nach Anspruch 5, wobei die im Wesentlichen konstante Fließgeschwindigkeit mindestens 6.000 m³/h, besser mindestens 9.000 m³/h und noch besser mindestens 12.000 m³/h beträgt.

7. Verfahren nach allen vorherigen Ansprüchen, wobei der Zentrifugalabscheider (10) einen Hydrozyklon (14) aufweist.

8. Verfahren nach Anspruch 7, wobei der Zentrifugalabscheider einen Mehrfachzyklon (14a, 14b, 14c, ...) aufweist.

9. Verfahren nach einem der Ansprüche 1 bis 8, wobei der Gravitationsabscheider (20) ein Entwässerungssieb aufweist, welches das trockene Baggergut (52) in Vibration versetzt und es unter dem Einfluss der Schwerkraft in einen trockeneren (53) und einen nasseren Teil (54) trennt.

10. Verfahren nach Anspruch 9, wobei das Transportschiff (40) zur Aufnahme einer Menge eines trockeneren Teils (53) des Baggerguts (50) geeignet ist, die mindestens 100.000 Tonnen, besser mindestens 150.000 Tonnen und noch besser mindestens 200.000 Tonnen beträgt.

11. Verfahren nach einem der vorherigen Ansprüche, wobei der trockenere Teil (53) einen Wassergehalt von nicht mehr als 20 Gew.-%, besser von nicht mehr als 15 Gew.-%, aufweist.

12. Verfahren zur Beförderung großer Mengen an Baggergut (50) von Ausbaggerungsstätten zu Abladestätten, die sich weit entfernt befinden, aufweisend die Schritte des Anlegens mindestens eines seetauglichen Transportschiffs (40) in der Nähe der Ausbaggerungsstätte, wobei das Transportschiff (40) deutlich größere Abmessungen als ein Baggerschiff (30) aufweist und geeignet ist, eine große Menge an Baggergut (50) in beförderungsfähigem Zustand aufzunehmen, des Ausbaggerns von Baggergut (50) unter Verwendung mindestens eines Baggerschiffs (30), des Versetzens des Baggerguts (50) in einen beförderungsfähigen Zustand durch Anwendung eines Verfahrens nach einem der Ansprüche 1 bis 11, des Sammelns mindestens des trockeneren Teils (53) im Transportschiff (40), des Beförderns des trockeneren Teils (53) zur Abladestätte unter Verwendung des Transportschiffs (40), des Anlegens des Transportschiffs (40) an der Abladestätte und des Entladens des trockeneren Teils (53) vom Transportschiff (40) an der Abladestätte.

13. Anlage zur Behandlung von Baggergut (50), wobei die Anlage eine Einheit (1) umfasst, die Folgendes aufweist:
mindestens einen Zentrifugalabscheider (10), der geeignet ist, das Baggergut (50) in einen Nassanteil (51) und einen Trockenanteil (52) zu trennen, wobei der Zentrifugalabscheider (10) eine Zuführung für das zu behandelnde Baggergut (50) und eine Ablassvorrichtung für den Trockenanteil (52) aufweist;
wobei die Anlage weiterhin Folgendes aufweist: ein Transportschiff (40), **dadurch gekennzeichnet, dass** die Einheit (1) weiterhin mindestens einen Gravitationsabscheider (20) aufweist, der an die Ablassvorrichtung des Zentrifugalabscheiders (10) angeschlossen und
geeignet ist, den Trockenanteil (52) in einen trockeneren (53) und einen nasseren Teil (54) des Trockenanteils (52) zu trennen, und weiterhin ein Ablassmittel (25) zum Ablassen des trockeneren Teils (53) aufweist; und dass das Transportschiff (40) so ausgelegt ist, dass es eine Menge eines trockeneren Teils (53) des Baggerguts (50) aufnehmen kann, die mindestens 50.000 Tonnen beträgt.

14. Anlage nach Anspruch 13, wobei die Einheit (1) auf einem Baggerschiff (30) oder Ponton bereitgestellt wird.

15. Anlage nach Anspruch 13, wobei die Einheit (1) auf dem Transportschiff (40) bereitgestellt wird.

16. Anlage nach Anspruch 15, wobei die Einheit (1) in Bezug auf den Frachtraum des Transportschiffs so angeordnet ist, dass das Ablassen des trockeneren Teils (53) in den Frachtraum ohne das Eingreifen eines Ablassmittels stattfindet.

## Revendications

1. Procédé pour traiter du matériau dragué (50) extrait au moyen d'un bâtiment de dragage (30), étant entendu que le matériau dragué (50) est amené depuis le bâtiment de dragage (30) jusqu'à au moins un séparateur centrifuge (10), lequel séparateur centrifuge (10) sépare le matériau dragué (50) en une fraction humide (51) et une fraction sèche (52), **caractérisé en ce qu'**au moins la fraction sèche (52) est collectée et amenée jusqu'à un séparateur gravimétrique (20), lequel séparateur gravimétrique (20) sépare davantage la fraction sèche collectée (52) en une fraction plus sèche (53) et une fraction plus humide (54) par rapport à la fraction sèche (52), étant entendu qu'au moins la fraction plus sèche (53) est collectée dans un bâtiment de transport (40), adapté pour recevoir une quantité de fraction plus sèche (53) du matériau dragué (50) s'élevant à au moins 50 000 tonnes.

2. Procédé selon la revendication 1, dans lequel le matériau dragué (50) est porté à la masse volumique appropriée avant d'être amené jusqu'au séparateur centrifuge (10).

3. Procédé selon la revendication 2, dans lequel on porte la masse volumique du matériau dragué (50) à la masse volumique appropriée en y ajoutant de l'eau.

4. Procédé selon la revendication 3, dans lequel on porte la masse volumique du matériau dragué (50) à la masse volumique appropriée en assurant un écoulement d'eau dans lequel le matériau dragué (50) est injecté de manière régulée.

5. Procédé selon l'une quelconque des revendications précédentes, dans lequel le matériau dragué (50) est amené selon un débit sensiblement constant jusqu'au séparateur centrifuge (10).

6. Procédé selon la revendication 5, dans lequel le débit sensiblement constant s'élève à au moins 6 000 m³/heure, de préférence à au moins 9 000 m³/heure et, de manière particulièrement préférée, à au moins 12 000 m³/heure.

7. Procédé selon l'une quelconque des revendications précédentes, dans lequel le séparateur centrifuge (10) comprend un hydrocyclone (14).

8. Procédé selon la revendication 7, dans lequel le séparateur centrifuge comprend un multicyclone (14a, 14b, 14c...).

9. Procédé selon l'une quelconque des revendications 1-8, dans lequel le séparateur gravimétrique (20) comprend un crible d'égouttage qui met la fraction sèche (52) collectée en vibration et la sépare, sous l'influence de la force gravitationnelle, en une fraction plus sèche (53) et une fraction plus humide (54).

10. Procédé selon la revendication 9, dans lequel le bâtiment de transport (40) convient pour recevoir une quantité de fraction plus sèche (53) du matériau dragué (50) qui s'élève à au moins 100 000 tonnes, de préférence à au moins 150 000 tonnes et, de manière particulièrement préférée, à au moins 200 000 tonnes.

11. Procédé selon l'une quelconque des revendications précédentes, dans lequel la fraction plus sèche (53) a une teneur en eau de 20 % en poids au maximum, de préférence de 15 % en poids au maximum.

12. Procédé pour transférer de grandes quantités de matériau dragué (50) depuis des zones d'extraction jusqu'à une zone de récupération située à une grande distance de là, comprenant les étapes consistant à amarrer à proximité de la zone d'extraction au moins un bâtiment de transport de haute mer (40) de dimensions considérablement plus grandes qu'un bâtiment de dragage (30) et adapté pour recevoir une grande quantité de matériau dragué (50) dans un état transportable, à extraire le matériau dragué (50) en utilisant au moins un bâtiment de dragage (30), à mettre le matériau dragué (50) dans un état transportable en appliquant un procédé selon l'une quelconque des revendications 1-11, à collecter au moins la fraction plus sèche (53) dans le bâtiment de transport (40), à transporter la fraction plus sèche (53) jusqu'à la zone de récupération en utilisant le bâtiment de transport (40), à amarrer le bâtiment de transport (40) dans la zone de récupération et à décharger la fraction plus sèche (53) du bâtiment de transport (40) dans la zone de récupération.

13. Ensemble pour traiter du matériau dragué (50), l'ensemble comprenant un dispositif (1), lequel dispositif (1) comprend :
- au moins un séparateur centrifuge (10) adapté pour séparer le matériau dragué (50) en une fraction humide (51) et une fraction sèche (52), étant entendu que le séparateur centrifuge (10) comprend une amenée pour le matériau dragué (50) à traiter et une évacuation pour la fraction sèche (52),
l'ensemble comprenant par ailleurs un bâtiment de transport (40),
**caractérisé en ce que** :
- le dispositif (1) comprend par ailleurs au moins un séparateur gravimétrique (20) relié à l'évacuation du séparateur centrifuge (10) et adapté pour séparer la fraction sèche (52) en une fraction plus sèche (53) et une fraction plus humide (54) par rapport à la fraction sèche (52), et comprenant un moyen de déchargement (25) pour décharger la fraction plus sèche (53),
et **en ce que** :
- le bâtiment de transport (40) est adapté pour recevoir une quantité de fraction plus sèche (53) du matériau dragué (50) s'élevant à au moins 50 000 tonnes.

14. Ensemble selon la revendication 13, dans lequel le dispositif (1) est réalisé sur un bâtiment de dragage (30) ou un ponton.

15. Ensemble selon la revendication 13, dans lequel le dispositif (1) est réalisé sur le bâtiment de transport (40).

16. Ensemble selon la revendication 15, dans lequel le dispositif (1) est positionné par rapport à la cale du bâtiment de transport (40) de telle sorte que le déchargement de la fraction plus sèche (53) dans la cale a lieu sans moyen de déchargement interposé.
